(19) Europäisches Patentamt
European Patent Office
Office européen des brevets

(11) **EP 2 728 269 B1**

(12) **EUROPÄISCHE PATENTSCHRIFT**

(45) Veröffentlichungstag und Bekanntmachung des Hinweises auf die Patenterteilung:
**22.06.2016 Patentblatt 2016/25**

(51) Int Cl.:
***F24D 19/10*** *(2006.01)*

(21) Anmeldenummer: **13188426.4**

(22) Anmeldetag: **14.10.2013**

(54) **Verfahren zum hydraulischen Abgleich eines Heizungssystems**

Method for hydraulic calibration of a heating system

Procédé d'équilibrage hydraulique d'un système de chauffage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.10.2012 AT 11652012**

(43) Veröffentlichungstag der Anmeldung:
**07.05.2014 Patentblatt 2014/19**

(73) Patentinhaber: **Vaillant GmbH**
**42859 Remscheid (DE)**

(72) Erfinder:
• **Fischer, Christian**
**42899 Remscheid (DE)**
• **Wriske, Jochen**
**42857 Remscheid (DE)**

(74) Vertreter: **Popp, Carsten**
**Vaillant GmbH**
**IRP**
**Berghauser Straße 40**
**42859 Remscheid (DE)**

(56) Entgegenhaltungen:
**EP-A2- 1 074 795**          **EP-A2- 2 085 707**
**DE-A1-102010 022 763**

EP 2 728 269 B1

**Beschreibung**

Die Erfindung betrifft ein Verfahren zum hydraulischen Abgleich eines Heizungssystems. Ein Heizungssystem besteht in der Regel aus einer Wärmequelle, z.B. einem Heizkessel, sowie mehreren Radiatoren. Die Wärmequelle und die Radiatoren sind über ein wasserhydraulisches Rohrleitungssystem, in dem mittels einer Heizkreispumpe Wasser umgewälzt wird, miteinander verbunden.

Bei der Auslegung des Heizungssystems wird der Wärmebedarf der einzelnen Räume des Gebäudes ermittelt und auf die einzelnen Radiatoren bezogen. In einem zweiten Schritt werden die Radiatoren hydraulisch so aneinander abgeglichen, dass bei einer gegebenen Vorlauftemperatur jeder Radiator mit einem Volumenstrom von warmem Wasser versorgt wird, der geeignet ist, die erforderliche Wärmemenge zu transportieren. Ein fehlerhafter hydraulischer Abgleich würde dazu führen, dass die Vorlauftemperatur erhöht werden müsste, um jeden Raum mit der benötigten Wärmemenge zu versorgen. Ein hoher Gesamtwirkungsgrad des Heizungssystems wird jedoch nur erreicht, wenn die Vorlauftemperatur möglichst gering ist. Daher muss dem hydraulischen Abgleich besondere Aufmerksamkeit geschenkt werden. Der hydraulische Abgleich erfolgt während der Planung durch Festlegung eines individuellen $k_v$-Wertes für jeden Radiator. Der $k_v$-Wert ist der Kehrwert des hydraulischen Widerstands. Er kann mittels eines Drosselventils vor oder an dem Radiator eingestellt werden. Da ein Messen der benötigten Größen mit hohem Aufwand verbunden ist, werden die nötigen Einstellungen des $k_v$-Werts bei der Planung berechnet und bei der Installation einmalig fest eingestellt. Eine Verifikation der Einstellung wird im Regelfall nicht vorgenommen.

In der Praxis kann es vorkommen, dass aufgrund von Abweichungen zwischen Planung und baulicher Ausführung, beispielsweise geringere Rohrdurchmesser oder längere Rohrleitungen, die tatsächlichen $k_v$-Werte von den geplanten abweichen. Wenn ein Heizkörper, bedingt durch einen zu hohen hydraulischen Widerstand beziehungsweise zu kleinem $k_v$-Wert, einen zu geringen Wärmestrom erhält, bleibt dieser kalt und kann den Raum nicht genügend erwärmen, so dass die Vorlauftemperatur erhöht werden muss.

Dies kann nur vermieden werden, wenn nach jeder Installation oder Veränderung des Heizungssystems ein hydraulischer Abgleich durchgeführt wird, welcher zum Ziel hat, die einzelnen hydraulischen Widerstände optimal aufeinander abzustimmen. Dabei stellt das Verfahren des hydraulischen Abgleichs sicher, dass den Wärmeentnahmestellen die Volumenströme bereitgestellt werden, die sie entsprechend des Raumwärmebedarfs benötigen.

Aus der Patentanmeldung EP 1 074 795 A2 ist ein Verfahren zum hydraulischen Abgleich eines Heizungssystems laut dem Oberbegriff des Anspruchs 1 bekannt. Dazu werden Ventile der Heizkörper der Reihe nach so eingestellt, dass die einzelnen Heizkörper mit der gewünschten Durchflussmenge durchströmt werden.

Die Patentanmeldung EP2 085 707 A2 beschreibt ebenfalls ein Verfahren, in dem die Heizkörper jeweils im Alleinbetrieb und bei Nenn-Volumenstrom einstellt werden, wobei Mittel zur Erfassung des vom Heizgerät bereitgestellten Volumenstroms und Mittel zur Erfassung der Druckdifferenz zwischen vor und Rücklaufanschluss verwendet werden.

In der Offenlegungsschrift DE 10 2010 022 763 A1 wird Verfahren zum automatischen hydraulischen Abgleich offenbart, bei dem mehrere jeweils zu Strängen zusammengefasste Heizkörper als Gruppe hydraulisch abgeglichen werden.

Es ist daher Aufgabe der Erfindung, ein einfaches und kostengünstiges Verfahren bereitzustellen, mit dem an einem bestehenden Heizungssystem die $k_v$-Werte überprüft und korrigiert werden können und das ohne aufwändige zusätzlich zu installierende Messeinrichtungen und mit wenigen Ventilbetätigungen auskommt.

Diese Aufgabe wird erfindungsgemäß durch ein Verfahren gemäß dem unabhängigen Anspruch gelöst. Die abhängigen Ansprüche beschreiben Weiterbildungen und Varianten des erfindungsgemäßen Verfahrens.

Das erfindungsgemäße Verfahren macht sich die Tatsache zu Nutze, dass in dem Heizkreis ein Heizgerät mit integriertem Durchflussmesser vorgesehen ist. Dabei wird das Signal des Durchflussmessers und eine weitere Kenngröße, die mit dem Druckabfall im Heizkreis korreliert und aus der der Druckabfall ermittelt werden kann, verwendet, um die $k_v$-Werte der Radiatoren zu ermitteln. Dazu werden die Verfahrensschritte gemäß Anspruch 1 durchgeführt, wobei der hydraulische Widerstand bzw. die $k_v$-Werte indirekt durch die Lösung eines Gleichungssystems mit mehreren Unbekannten ermittelt. Danach werden diese Schritte für die anderen geöffneten Radiatoren wiederholt, bis die hydraulischen Widerstände bzw. $k_v$-Werte aller zu vermessenden Radiatoren ermittelt sind. Dabei kann ein Radiator einen Heizkörper, einen Heizkörperstrang, eine Fußbodenheizung, Deckenheizung und/oder Wandheizung umfassen. Dies hat den Vorteil, dass die Summe der Ventilbetätigungen reduziert werden kann.

In einer Weiterbildung der Erfindung wird im ersten Verfahrensschritt die Heizkreispumpe in mehreren verschiedenen Betriebszuständen betrieben. Mittels einer Regressionsanalyse wird dann der hydraulische Widerstand bzw. der $k_v$-Wert bezüglich der Funktion $\dot{V} = k_v \cdot \sqrt{(\Delta p / 1 \text{bar})}$ gemittelt.

In einer vorteilhaften Ausführung des erfindungsgemäßen Verfahrens wird dabei der Differenzdruck anhand der Pumpendrehzahl und der Pumpenkennlinien der Heizkreispumpe in Verbindung mit einem integrierten Durchflussmesser berechnet.

Das Ventil, mit dem ein Radiator verschlossen wird, kann ein Thermostatventil, welches zum Regeln der Wärmemenge des Radiators eingesetzt wird, oder ein in der Zuleitung des Radiators angeordnetes Drossel- oder Absperrventil sein.

In der Regel wird das Öffnen und das Schließen der Ventile manuell von einem Bediener vorgenommen. Über ein drahtgebundenes oder drahtloses Endgerät erhält der Bediener von der Steuerung des Heizgeräts, welches die Heizungspumpe in den für das erfindungsgemäße Verfahren benötigten Betriebspunkten betreibt und die $k_V$-Werte berechnet, Anweisungen.

In einer Variante des Verfahrens erfolgt das Öffnen und Schließen der Ventile automatisiert.

Besonders vorteilhaft werden nach der nacheinander wiederholten Anwendung der beschriebenen erfindungsgemäßen Verfahrensschritte alle $k_V$-Werte ermittelt und bei Abweichungen von den geplanten Sollwerten neue Sollwerte für die $k_V$-Werte der einzelnen Radiatoren berechnet, so dass das Verhältnis der $k_V$-Werte untereinander den Erfordernissen der Planung entspricht. Neue Sollwerte für alle Radiatoren sind dann erforderlich, wenn der $k_V$-Wert eines einzelnen Radiators durch Öffnen des Ventils nicht weiter erhöht werden kann. Dies ist dann der Fall, wenn der hydraulische Widerstand des Radiators oder der Zuleitung zu hoch ist und/oder wenn es sich um den Radiator mit dem größten Wärmebedarf handelt. In diesem Fall müssen die $k_V$-Werte aller anderen Radiatoren erhöht werden, so dass das Verhältnis der $k_V$-Werte untereinander dem geplanten Sollwert entspricht. Der Betriebpunkt der Heizkreispumpe im Heizbetrieb ist den veränderten $k_V$-Werten anzupassen.

Ebenfalls besonders vorteilhaft wird abschließend ein Protokoll der Messung und der Ermittlung der $k_V$-Werte erstellt.

Die Erfindung wird nun anhand der Figuren detailliert erläutert.

Es stellen dar:

Figur 1:    Einen Heizkreis zum Durchführen des erfindungsgemäßen Verfahrens,
Figur 2:    Ein Diagramm zur Erläuterung der Ermittlung des Druckabfalls.

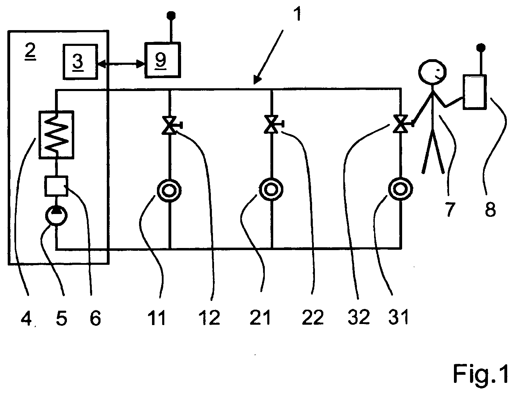

Figur 1 zeigt ein Heizungssystem zum Durchführen des erfindungsgemäßen Verfahrens. Ein Heizgerät 2 ist über einen Heizkreis 1 mit Radiatoren 11, 21, 31 verbunden. Eine Heizkreispumpe 5 pumpt das Heizungswasser durch einen Wärmetauscher 4, wo es im Normalbetrieb erwärmt werden kann. Ein Durchflussmesser 6 ermittelt den Volumenstrom. Mittels Ventilen 12, 22, 32 kann der Durchfluss des Wassers durch die Radiatoren 11, 21, 31 unterbunden werden. Eine Steuerung 3, die im Heizgerät 2 integriert sein kann oder extern anschließbar ist koordiniert die Verfahrensschritte. Über ein Kommunikationsgerät 9, welches mit einem Endgerät 8 drahtlos oder drahtgebunden kommuniziert, wird ein Bediener 7 angewiesen, bestimmte Ventile 12, 22, 32 zu schließen oder zu öffnen. Sofern automatisch betätigbare Ventile 12, 22, 32 zur Verfügung stehen, können diese auch durch die Steuerung 3 veranlasst automatisch betätigt werden.

Das Erfindungsgemäße Verfahren kann beispielsweise wie folgt ablaufen. Zunächst wird der Bediener 7 aufgefordert, alle Ventile zu verschließen und beispielsweise das Ventil 32 zu öffnen. Nun wird die Heizkreispumpe 5 in einem oder mehreren Betriebspunkten betrieben und der $k_V$-Wert ermittelt. Im nächsten Schritt verschließt der Bediener 7 das Ventil 32 und öffnet das Ventil 22 und der oben genannten Verfahrensschritte wiederholt sich. Ebenfalls ist es möglich, dass das Ventil 32 nicht verschlossen wird und die kv-Werte der Radiatoren 21 und 31 gemeinsam ermittelt werden, wobei der kv-Wert des Radiator 31 bereits bekannt ist, so dass der $k_V$-Wert des Radiator 21 durch Subtraktion aus dem gemeinsamen $k_V$-Wert und dem $k_V$-Wert des Radiators 31 ermittelt werden kann. Es ist auch jede andere Kombination möglich, solange das Gleichungssystem der $k_V$-Werte eindeutig gelöst werden kann.

In einem anschließenden Verfahrensschritt werden die Sollwerte der $k_V$-Werte neu ermittelt, indem zunächst der kritische Radiator mit dem kleinsten $k_V$-Wert ermittelt wird. In einem nächsten Schritt wird vorab überprüft, ob der $k_V$-Wert des kritischen Radiators eventuell durch Öffnen eines Drosselventils erhöht werden kann. Ist dies der Fall, wird das Drosselventil geöffnet und das beschriebene Verfahren wiederholt. Ist dies nicht der Fall, werden für alle anderen Radiatoren neue $k_V$-Werte ermittelt, indem der jeweilige Soll- $k_V$-Wert mit dem Quotient aus dem Ist-$k_V$-Wert und dem Soll-$k_V$-Wert des kritischen Radiators multipliziert wird. In einem fiktiven Beispiel sei für den Radiator 21, für den ein Soll-$k_V$-Wert von 0,4 festgelegt wurde, ein Ist-$k_V$-Wert von 0,2 ermittelt worden. Das Verhältnis zwischen Ist- $k_V$-Wert und Soll- $k_V$-Wert beträgt 0,5. Daher werden die Soll- $k_V$-Werte der Radiatoren 11 und 31 mit dem Faktor 0,5 multipliziert. Dies ist nachfolgend beispielhaft in einer Tabelle dargestellt.

| Radiator | Ist-$k_V$-Wert | Soll-$k_V$-Wert | Korrigierter Soll-$k_V$-Wert |
|---|---|---|---|
| 11 | 0,8 | 0,6 | 0,3 |
| 21 | 0,2 | 0,4 | 0,2 |
| 31 | 0,5 | 0,5 | 0,25 |

Die Berechnung kann entweder durch die Steuerung 3 oder durch einen externen Rechner, beispielsweise das Endgerät 8 des Bedieners 7, erfolgen.

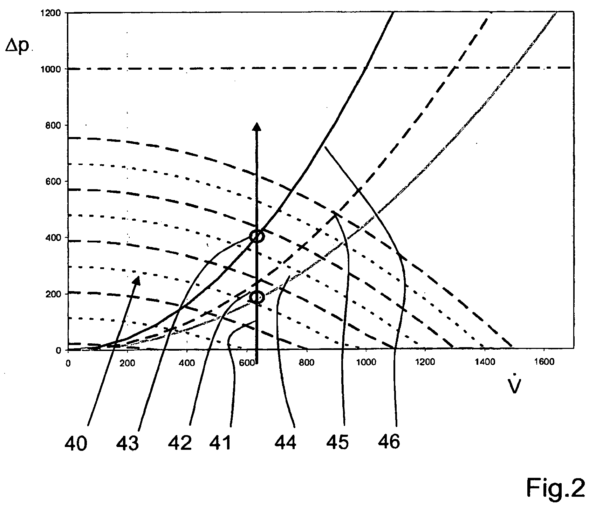

Da sich aufgrund der Korrektur der $k_v$-Werte der hydraulische Widerstand des Heizkreises deutlich erhöht hat, muss die Heizkreispumpe 5 in einem anderen Arbeitspunkt betrieben werden, um den gleichen Volumenstrom zu fördern. Dies ist in Figur 2 dargestellt.

Ebenfalls wird von der Messung und gegebenenfalls von der Korrektur ein Protokoll erstellt.

In Figur 2 ist in auf der Abszisse der Volumenstrom V und der Ordinate der Druckabfall Δp aufgetragen. Mit steigendem Volumenstrom V abfallend dargestellt ist die Pumpenkennlinienschar 40 für verschiedene Pumpendrehzahlen. Die Vertikale 41 stellt eine Linie gleichen Volumenstroms V gemäß der Auslegung der Heizungsanlage dar. Mit steigendem Volumenstrom V ansteigend dargestellt sind die Anlagen Kennlinie gemäß Auslegung 44, gemäß Messung 45 und gemäß korrigierter Auslegung 46. Mit 42 ist der ursprüngliche Auslegungspunkt der Anlage dargestellt. Aufgrund der wie oben beschrieben geänderten $k_v$-Werte erhöht sich der hydraulische Widerstand des Heizkreises 1 zu der Anlagen Kennlinie 46. Damit die Heizkreispumpe den geplanten Volumenstrom fördert, muss die Drehzahl der Heizkreispumpe in der Weise erhöht werden, dass sich der korrigierter Auslegungspunkt 43 einstellt.

In dem erfindungsgemäßen Verfahren erfolgt dies in einem Verfahrensschritte in der Weise, dass die Heizkreispumpendrehzahl sukzessive erhöht wird, bis der vom Durchflussmesser 6 gemessene Volumenstrom dem Auslegungsvolumenstrom gemäß Heiznetzberechnung entspricht.

Bezugszeichenliste

| | |
|---|---|
| 1 | Heizkreis |
| 2 | Heizgerät |
| 3 | Steuerung |
| 4 | Wärmetauscher |
| 5 | Heizkreispumpe |
| 6 | Durchflussmesser |
| 7 | Bediener |
| 8 | Endgerät |
| 9 | Kommunikationsgerät |
| 11 | Radiator |
| 12 | Ventil |
| 21 | Radiator |
| 22 | Ventil |
| 31 | Radiator |
| 32 | Ventil |
| 40 | Pumpenkennlinienschar |
| 41 | Soll-Volumenstrom |
| 42 | Ursprünglicher Auslegungspunkt |
| 43 | Korrigierter Auslegungspunkt |
| 44 | Anlagenkennlinie gemäß Auslegung |
| 45 | Anlagenkennlinie gemäß Messung |
| 46 | Anlagenkennlinie gemäß korrigierter Auslegung |

**Patentansprüche**

**1.** Verfahren zum hydraulischen Abgleich eines Heizungssystems, umfassend zumindest eine Heizkreispumpe (5), einen Durchflussmesser (6) und mehrere in einem Heizkreis (1) parallel angeordnete Radiatoren (11, 21, 31) mit Ventilen (12, 22, 32), beinhaltend die Verfahrensschritte

i) Herstellen eines Zustands, in dem die Ventile (12, 22, 32) aller Radiatoren (11, 21, 31) verschlossen sind außer einem, welches in definierter Weise geöffnet ist,

ii) Betreiben der Heizungspumpe in zumindest einem Betriebspunkt und Berechnen oder Messen der Durchflussmenge und des Differenzdrucks,

iii) Berechnen des hydraulischen Widerstands beziehungsweise $k_v$-Werts des dem geöffneten Ventil zugeordneten Radiators,

iv) Wiederholen der Schritte i) bis iii) mit geöffneten Ventilen jeweils anderer Radiatoren,

**dadurch gekennzeichnet, dass** in zumindest einem der Schritte i) mehrere der Ventile (12, 22, 32) gleichzeitig geöffnet sind und wobei im dazu gehörenden Schritt iii) der hydraulische Widerstands eines der den geöffneten Ventilen (12, 22, 32) zugeordneten Radiators (11, 21, 31) durch Differenzbildung mit Hilfe des zuvor ermittelten hydraulischen Widerstands eines oder mehrerer anderer den geöffneten Ventilen (12, 22, 32) zugeordneten Radiatoren (11, 21, 31) ermittelt wird.

2. Verfahren nach Anspruch 1, wobei ein Radiator (11, 21, 31) einen Heizkörper, ein Heizkörperstrang, eine Fußboden-, Decken- und/oder Wandheizung umfasst.

3. Verfahren nach Anspruch 1 oder 2, wobei im Schritt i) die Heizkreispumpe (5) nacheinander in mehreren verschiedene Betriebszuständen betrieben wird, im Schritt ii) mehrere Durchflussmengen ermittelt werden und im Schritt iii) der hydraulischen Widerstand mittels einer Regressionsrechnung aus den Messwerten ermittelt wird.

4. Verfahren nach einem der Ansprüche 1 bis 3, wobei der Differenzdruck anhand der Pumpendrehzahl und der Pumpenkennlinie der Heizkreispumpe (6) berechnet wird.

5. Verfahren nach einem der Ansprüche 1 bis 4, wobei das Ventil (12, 22, 32) ein Thermostatventil zum Regeln der Wärmemenge des zugeordneten Radiators (11, 21, 31) oder ein in der Zuleitung des zugeordneten Radiators (11, 21, 31) angeordnetes Drossel- oder Absperrventil ist.

6. Verfahren nach einem der vorhergehenden Ansprüche, wobei nach Abschluss mehrerer durchgeführter Schritte i) die Schritte iii) durchgeführt werden, wobei die hydraulischen Widerstände durch Lösen eines Gleichungssystems mit mehreren Unbekannten ermittelt werden.

7. Verfahren nach einem der Ansprüche 1 bis 6, wobei das Öffnen und Verschließen der Ventile (12, 22, 32) manuell von einem Bediener (7) erfolgt und wobei der Bediener (7) die Anweisungen zum Öffnen und Schließen über ein drahtgebundenes oder drahtloses Endgerät (8) erhält.

8. Verfahren nach einem der Ansprüche 1 bis 6, wobei das Öffnen und Verschließen der Ventile (12, 22, 32) automatisiert und durch eine Steuerung des Heizungssystems koordiniert erfolgt.

9. Verfahren nach einem der vorhergehenden Ansprüche, wobei das Verfahren einen abschließenden Verfahrensschritt

v) Berechnen und Einstellen neuer Sollwerte für die Kehrwerte der hydraulischen Widerstände $k_v$ der Radiatoren (11, 21, 31) in der Art, dass das Verhältnis der Kehrwerte der hydraulischen Widerstände $k_v$ untereinander den Erfordernissen der Planungsvorgaben für das Heizungssystem entspricht
und einen optionalen abschließenden Verfahrensschritt
vi) Gegebenfalls Korrigieren des Arbeitspunktes der Heizkreispumpe, der den veränderten Kehrwerten der hydraulischen Widerstände $k_v$ Rechnung trägt und/oder einen weiteren abschließenden Verfahrensschritt
vii) Erstellen eines Protokolls, welches zumindest die Kehrwerte der hydraulischen Widerstände $k_v$ der Radiatoren (11, 21, 31) ausweist
umfasst.

## Claims

1. Method for the hydraulic balancing of a heating system, comprising at least one heating circuit pump (5), one flowmeter (6) and several radiators (11, 21, 31) arranged in parallel in a heating circuit (1), said radiators (11, 21, 31) having valves (12, 22, 32), including the method steps:

i) Creation of a condition, in which the valves (12, 22, 32) of all radiators (11, 21, 31) are closed except one, which is opened in a defined manner,
ii) Operation of the heating pump at at least one operating point and calculation or measurement of the flow volume and the differential pressure,
iii) Calculation of the hydraulic resistance or $k_v$ value of the radiator assigned to the opened valve,
iv) Repetition of steps i) to iii) with opened valves of the other radiators in each case, **characterised in that**, in at least one of the steps i), several valves (12, 22, 32) are opened at the same time and wherein in the associated step iii), the hydraulic resistance of one radiator (11, 21, 31) assigned to the opened valves (12, 22, 32) is determined by the difference by means of the previously determined hydraulic resistance of one or more of the other radiators (11, 21, 31) assigned to the opened valves (12, 22, 32).

2. Method according to claim 1, wherein a radiator (11, 21, 31) comprises a heater, a heater strand, underfloor, ceiling and/or wall heating.

3. Method according to claim 1 or 2, wherein in step i), the heating circuit pump (5) is operated consecutively in several different operating conditions, in step ii), several flow volumes are determined and in step iii), the hydraulic resistance is determined from the measurement values by means of a regression calculation.

4. Method according to one of claims 1 to 3, wherein the differential pressure is calculated by means of the pump speed and the pump characteristic curve of the heating circuit pump (6).

5. Method according to one of claims 1 to 4, wherein the valve (12, 22, 32) is a thermostatic valve for the regulation of the heat quantity of the assigned radiator (11, 21, 31) or a throttle or shut-off valve arranged in the supply line of the assigned radiator (11, 21, 31).

6. Method according to one of the preceding claims, wherein the steps iii) are performed after completion of several performed steps i), wherein the hydraulic resistances are determined by solving a system of equations with several unknowns.

7. Method according to one of claims 1 to 6, wherein the opening and closing of the valves (12, 22, 32) is carried out manually by an operator (7) and wherein the operator (7) receives the instructions for opening and closing via a wired or wireless terminal (8).

8. Method according to one of claims 1 to 6, wherein the opening and closing of the valves (12, 22, 32) is carried out automatically and coordinated by a control of the heating system.

9. Method according to one of the preceding claims, wherein the method comprises a final method step:

v) Calculation and adjustment of new target values for the reciprocal values of hydraulic resistances $k_v$ of the radiators (11, 21, 31) in such a way that the relationship to one another of the reciprocal values of the hydraulic resistances $k_v$ meets the requirements of the planning guidelines for the heating system
and an optional final method step
vi) If necessary, correction of the operating point of the heating circuit pump, which takes into account the modified reciprocal values of the hydraulic resistances $k_v$ and/or a further final method step
vii) Creation of a report which has at least the reciprocal values of the hydraulic resistances $k_v$ of the radiators (11, 21, 31).

**Revendications**

1. Procédé d'alignement hydraulique d'un système de chauffage, comprenant au moins une pompe de circuit de chauffage (5), un débitmètre (6) et plusieurs radiateurs (11, 21, 31) disposés en parallèle dans un circuit de chauffage (1) avec des soupapes (12, 22, 32), comprenant les étapes de procédé suivantes :

i) Création d'un état dans lequel les soupapes (12, 22, 32) de tous les radiateurs (11, 21, 31) sont fermées, à l'exception d'une seule, laquelle est ouverte de façon définie,
ii) Fonctionnement de la pompe de chauffage dans au moins un point de fonctionnement et calcul ou mesure du débit et de la pression différentielle,
iii) Calcul de la résistance hydraulique ou de la valeur $k_v$ du radiateur affecté à la soupape ouverte,
iv) Répétition des étapes i) à iii) avec des soupapes ouvertes d'autres radiateurs, **caractérisé en ce que** dans au moins une des étapes i), plusieurs soupapes (12, 22, 32) sont ouvertes simultanément et, dans l'étape correspondante iii), la résistance hydraulique d'un radiateur (11, 21, 31) affecté à l'une des soupapes ouvertes (12, 22, 32) est déterminée par soustraction à l'aide de la résistance hydraulique déjà déterminée d'un ou plusieurs autres radiateurs (11, 21, 31) affectés aux soupapes ouvertes (12, 22, 32).

**2.** Procédé selon la revendication 1, **selon lequel** un radiateur (11, 21, 31) comprend un élément de chauffage, une phase d'élément de chauffage, un chauffage par le sol, un chauffage au plafond et/ou un chauffage mural.

**3.** Procédé selon la revendication 1 ou 2, **selon lequel** dans l'étape i) la pompe de circuit de chauffage (5) est actionnée successivement dans plusieurs états de fonctionnement différents, dans l'étape ii) plusieurs débits sont déterminés et dans l'étape iii) la résistance hydraulique est déterminée au moyen d'un calcul de régression à partir des valeurs mesurées.

**4.** Procédé selon l'une quelconque des revendications 1 à 3, **selon lequel** la pression différentielle est calculée à l'aide de la vitesse de rotation de la pompe et de la courbe caractéristique de la pompe de circuit de chauffage (6).

**5.** Procédé selon l'une quelconque des revendications 1 à 4, **selon lequel** la soupape (12, 22, 32) est une soupape à thermostat destinée à régler la quantité de chaleur du radiateur affecté (11, 21, 31) ou une soupape de ralenti ou d'arrêt dans le câble d'alimentation du radiateur affecté (11, 21, 31).

**6.** Procédé selon l'une quelconque des revendications précédentes, **selon lequel** les étapes iii) sont exécutées après réalisation de plusieurs étapes i), la résistance hydraulique étant déterminée en résolvant un système d'équations avec plusieurs inconnues.

**7.** Procédé selon l'une quelconque des revendications 1 à 6, **selon lequel** l'ouverture et la fermeture des soupapes (12, 22, 32) est effectuée manuellement par un utilisateur (7) et selon lequel l'utilisateur (7) reçoit des instructions relatives à l'ouverture et à la fermeture par l'intermédiaire d'un terminal (8) relié par câble ou sans fil.

**8.** Procédé selon l'une quelconque des revendications 1 à 6, **selon lequel** l'ouverture et la fermeture des soupapes (12, 22, 32) est automatisée et est coordonnée par le pilotage d'un système de chauffage.

**9.** Procédé selon l'une quelconque des revendications précédentes, **selon lequel** le procédé comprend une étape finale

v) Calcul et réglage de nouvelles valeurs théoriques pour les valeurs réciproques de la résistance hydraulique $k_v$ des radiateurs (11, 21, 31) de sorte que le rapport des valeurs réciproques de la résistance hydraulique $k_v$ les unes par rapport aux autres correspond aux exigences des valeurs planifiées pour le système de chauffage et une étape finale facultative

vi) Le cas échéant, correction du point de fonctionnement de la pompe de circuit de chauffage, qui supporte le calcul des valeurs réciproques modifiées de la résistance hydraulique $k_v$

et/ou une autre étape finale

vii) Création d'un protocole, lequel présente au moins les valeurs réciproques de la résistance hydraulique $k_v$ des radiateurs (11, 21, 31).

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1074795 A2
- EP 2085707 A2

- DE 102010022763 A1